# EUROPÄISCHE PATENTSCHRIFT

(11) **EP 0 296 095 B1**
(45) Veröffentlichungstag und Bekanntmachung des Hinweises auf die Patenterteilung: **24.03.1993**
(21) Anmeldenummer: 88730114.1
(22) Anmeldetag: 11.05.1988
(51) Int. Cl.: H01R 9/22, H01R 9/24, H01R 4/24, H04Q 1/14

(54) **Anschlusseinheit für Kabelpaare der Fernmeldetechnik**
Connecting set for cable-pairs of the telecommunications engineering
Dispositif de raccordement pour paires de câbles de télécommunication

(30) Priorität: 05.06.1987 AU 2339/87
(43) Veröffentlichungstag der Anmeldung: 21.12.1988
(73) Patentinhaber: KRONE Aktiengesellschaft, D-14167 Berlin (DE)
(72) Erfinder: Fitzgerald, Robert Allen William, Bateau Bay, N.S.W. 2261 (AU); Bippus, Hans-Dieter, Holgate, N.S.W. 2250 (AU); Nicholls, Bryse Lindsay, Avoca Beach, N.S.W. 2260 (AU)

(56) Entgegenhaltungen:
- EP-A- 0 200 883
- DE-A- 2 804 478
- DE-A- 2 811 812
- DE-A- 3 018 251
- GB-A- 2 129 630

## Beschreibung

Die Erfindung bezieht sich auf eine Anschlußeinheit für Kabelpaare der Fernmeldetechnik gemäß dem Oberbegriff des Anspruches 1.

Eine Anschlußeinheit der gattungsgemäßen Art ist aus der DE 28 11 812 vorbekannt. Bei dieser Anschlußeinheit sind die regelmäßig für 10 Kabelpaare ausgebildeten elektrischen Verbinder an ihren Stirnseiten mit Halteschlitzen und der Montagerahmen mit zwei parallelen Reihen von Haltelaschen versehen, welche beim Aufstecken der elektrischen Verbinder in die Halteschlitze eingreifen. Die Klemmschlitze mit den Kontaktschlitzen der Schneid-Klemm-Kontaktelemente für die Kabelpaare sind in zwei parallelen Reihen in regelmäßig gleicher Höhe angeordnet. Die Bauart der elektrischen Verbinder aus jeweils zwei Kunststoffkörpern unterschiedlicher Konfiguration ist in der DE 28 04 478 näher beschrieben. Hierbei dient die eine Reihe von Schneid-Klemm-Kontaktelementen zum Anschließenden der ankommenden Kabelpaare und die andere Reihe der Schneid-Klemm-Kontaktelemente zum Anschließen der abgehenden Kabelpaare.

Nachteilig bei der bekannten Anschlußeinheit ist, daß sowohl die ankommenden als auch die abgehenden Kabelpaare von ein und derselben Seite der Anschlußeinheit mit den Schneid-Klemm-Kontaktelementen verbunden werden müssen und daß es unmöglich ist, einzelne fehlerhafte elektrische Verbinder zu entfernen und auszutauschen, ohne dadurch in die übrigen Verbinder einzugreifen.

Der Erfindung liegt von daher die Aufgabe zu Grunde, eine Anschlußeinheit der gattungsgemäßen Art zu schaffen, bei welcher eine Beschaltung der ankommenden und abgehenden Kabelpaare von unterschiedlichen Seiten des Montagerahmens möglich ist und bei welcher ferner einzelne fehlerhafte Verbinder entfernt und ausgetauscht werden können, ohne dadurch in die übrigen Verbinder eingreifen zu müssen.

Die Lösung dieser Aufgabe ergibt sich aus den kennzeichnenden Merkmalen des Anspruches 1. Durch die spiegelsymmetrische und identische Ausbildung der beiden Teilkörper eines jeden elektrischen Verbinders und durch deren Verrastbarkeit mit den Öffnungen des Montagerahmens können auf der einen Seite des Montagerahmens die ankommenden und auf der anderen Seite die abgehenden Kabelpaare angeschlossen werden. Ferner lassen sich in einfacher Weise auf geeignet gestanzten Montagerahmen in beliebiger Anordnung Gruppen von elektrischen Verbindern anordnen. Es ist dann möglich, einzelne fehlerhafte Verbinder zu entfernen und auszutauschcn, ohne dadurch in die übrigen Verbinder einzugreifen.

Weitere vorteilhafte Ausgestaltungen der Erfindung ergeben sich aus den Unteransprüchen.

Die Erfindung ist nachfolgend an Hand eines in den Zeichnungen dargestellten Ausführungsbeispieles einer Anschlußeinheit für Kabelpaare der Fernmeldetechnik näher erläutert. Es zeigen:
Fig. 1 eine perspektivische Darstellung der Anschlußeinheit unter Verwendung erfindungsgemäß ausgebildeter elektrischer Verbinder,
Fig. 2 einen axialen Querschnitt durch einen, einen Teil der Anschlußeinheit gemäß Fig. 1 bildenden Rahmenträger,
Fig. 3 eine Seitenansicht des Rahmenträgers nach Fig. 2,
Fig. 4 eine Draufsicht auf einen Rahmenträger nach Fig. 2.
Fig. 5 eine Vorderansicht eines in die Einheit nach Fig. 1 integrierten Montagerahmens;
Fig. 6 eine Seitenansicht des Montagerahmens nach Fig. 5;
Fig. 7 eine Draufsicht des Montagerahmens nach Fig. 6;
Fig. 8 einen vergrößerten horizontalen Querschnitt durch einen Teil der Verbindung zwischen dem Rahmenträger nach Fig. 2 und dem Montagerahmen nach Fig. 5;
Fig. 9 eine perspektivische Ansicht eines erfindungsgemäßen elektrischen Verbinders;
Fig. 10 eine Draufsicht des Verbinders nach Fig. 9;
Fig. 11 eine Draufsicht des Verbinders nach Fig. 9;
Fig. 12 eine Vorderansicht des Verbinders nach Fig. 9;
Fig. 13 einen Querschnitt entlang Linie 13-13 in Fig. 11;
Fig. 14 einen Querschnitt entlang Linie 14-14 in Fig. 12;
Fig. 15 eine perspektivische Ansicht von in den Verbinder nach Fig. 9 einbaubaren Trennkontakten;
Fig. 16 eine perspektivische Ansicht eines in den Verbinder nach Fig. 9 einbaubaren Anschlußkontaktes;
Fig. 17 eine Draufsicht eines in den Verbinder nach Fig. 9 einfügbaren Überspannungsschutzes;
Fig. 18 eine Seitenansicht des Uberspannungsschutzes nach Fig. 17;
Fig. 19 eine Querschnittsansicht des Überspannungsschutzes nach Fig. 17, entlang Linie 19-19 in Fig. 17;
Fig. 20 eine perspektivische Ansicht der inneren Bauteile des Überspannungsschutzes nach Fig. 17;

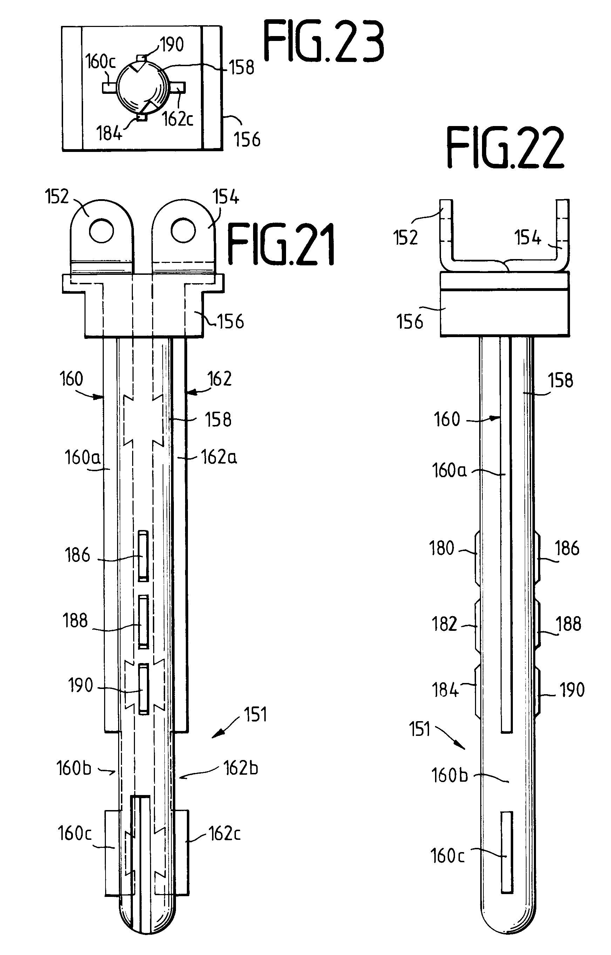

Fig. 21 eine Draufsicht eines Anschlußelementes des Überspannungsschutzes;
Fig. 22 eine Seitenansicht des Anschlußelementes nach Fig. 21;
Fig. 23 eine Stirnansicht des Anschlußelementes nach Fig. 21;
Fig. 24 ein Diagramm einer ersten Kontaktstellung, in der ein Kontaktelement des Überspannungsschutzes nach Fig. 17 mit zwei Kontaktpaaren des Verbinders nach Fig. 9 in Eingriff steht;
Fig. 25 ein Diagramm einer zweiten Kontaktstellung, bei der ein Kontaktelement des Überspannungsschutzes nach Fig. 17 mit einem Kontaktpaar des Verbinders nach Fig. 9 in Eingriff steht;
Fig. 26 ein Diagramm einer dritten Kontaktstellung, in der ein Kontaktelement des Überspannungsschutzes nach Fig. 17 mit einem anderen Kontaktpaar des Verbinders nach Fig. 9 in Eingriff steht;
Fig. 27 eine Draufsicht auf eine Vielzahl von in einer Fernmeldesäule angeordneten Anschlußeinheiten mit darin eingesetzten Verbindern, wobei an einigen dieser Einheiten Überspannungsschutz-Vorrichtungen vorgesehen sind.

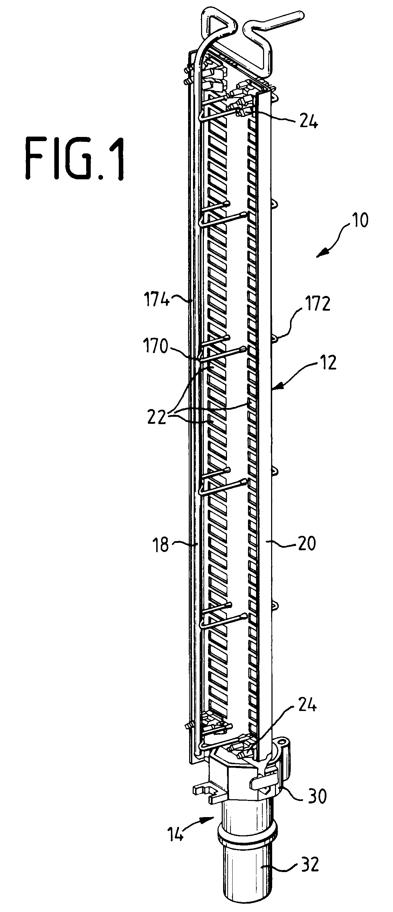

Die in Fig. 1 dargestellte Anschlußeinheit 10 ermöglicht die Verbindung zwischen Kabelpaaren, die bestimmten Telefonen oder Leitungen zugeordnet sind, mit einer Telefonvermittlung.

Die Einheit 10 besteht aus einem auf einem Rahmenträger 14 befestigten Montagerahmen 12 von langgestreckt U-förmigem Aufbau.

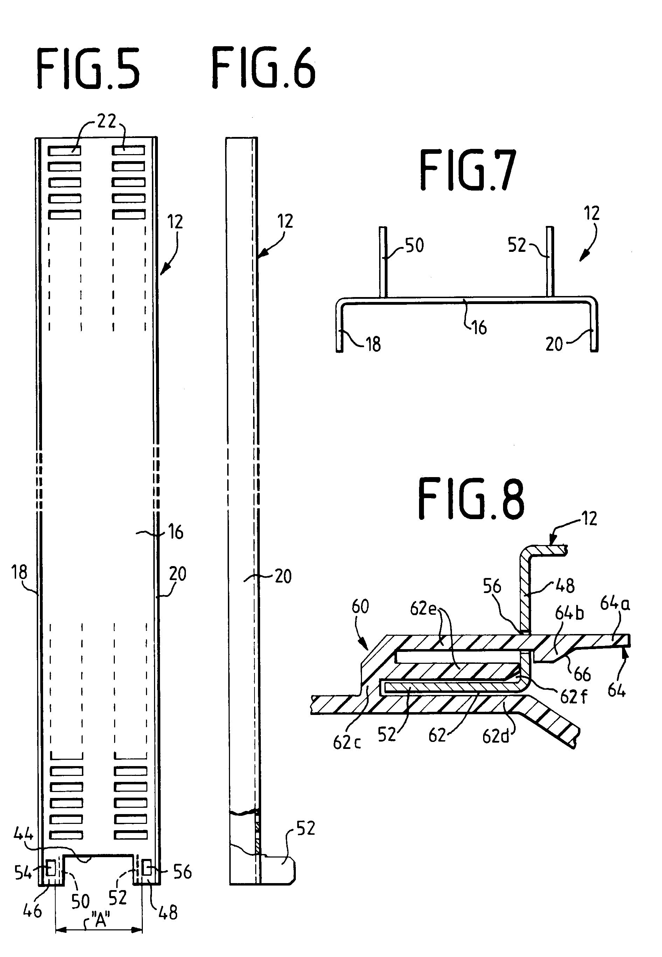

Aus den Fig. 5, 6 und 7 ist genauer ersichtlich, daß der Montagerahmen einen sich in Längsrichtung erstreckenden zentralen Stegbereich 16 mit sich gegenüberliegenden seitlichen Flanschen 18, 20 aufweist. Der Stegbereich 16 ist mit zwei sich in Längsrichtung erstreckenden Reihen von Öffnungen 22 in rechteckiger Ausbildung versehen. Die Öffnungen 22 dienen zur Aufnahme der nachstehend näher beschriebenen elektrischen Verbinder 24. Der Rahmen 12 nimmt also zwei Reihen dieser Verbinder, jeweils eine neben jedem der Flanschen 18, 20, auf.

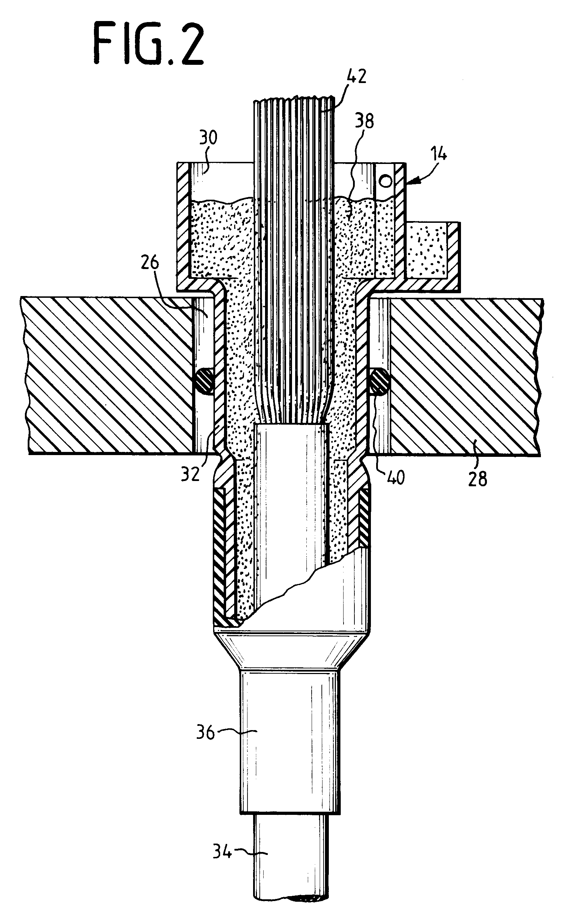

Der in Fig. 2 dargestellte Rahmenträger 14 ist so gestaltet, daß er in die normalerweise auf einer Bodenfläche ruhende Grundplatte 28 einer Telefon-Schaltstelle eingesetzt werden kann. Der Träger 14 besitzt einen oberen Teil 30, der sich dann oberhalb der Grundplatte 28 befindet, sowie einen sich davon abwärts erstreckenden zylindrischen Teil 32, der von einer Öffnung 26 in der Grundplatte 28 aufgenommen wird. Ein Kabel 34, beispielsweise ein unterirdisches Kabel, erstreckt sich durch den Teil 32 aufwärts in den Träger 14. Auf das untere Ende des Teils 32 und den Teil des Kabels, mit dem es in den Teil 32 des Trägers eintritt, ist ein Schlauch 36 aufgeschrumpft. Der Schlauch 36 bildet zusammen mit einer innerhalb des Trägers 14 (und insbesondere innerhalb des Teils 32 desselben) vorgesehenen geeigneten Dichtungsmasse 38 eine Abdichtung für das Kabel 34 an der Stelle, an der es in den Träger 14 eintritt. Der Spalt zwischen der Außenseite des Teils 32 und dem Umfang der Öffnung 26 ist mit einem nachgiebigen O-Ring 40 abgedichtet.

Das Kabel 34 besteht aus zahlreichen Kabelpaaren 42, die sich zur Herstellung von Verbindungen mit einzelnen, am Rahmen 12 befindlichen Verbindern 24 durch die Dichtungsmasse 38 hindurch aufwärts in den Träger 14 erstrecken.

Wie insbesondere aus Fig. 5 ersichtlich ist, weist der mittlere Stegteil 16 an seinem unteren Ende eine mittlere Ausnehmung 44 auf, so daß die sich beiderseits dieser Ausnehmung erstreckenden Bereiche des Stegteils 14 abwärts weisende Schenkel 46, 48 ausbilden. An den Innenkanten der Schenkel 46, 48 sind ferner am Stegteil 16 Finger 50 bzw. 52 ausgebildet, die senkrecht zur Mittelebene des Stegteils 16 von der den Flanschen 18, 20 gegenüberliegenden Seite des Stegteils 16 abstehen. Außerdem sind in den Schenkeln 46, 48 jeweils rechteckige Aussparungen 54, 56 vorgesehen.

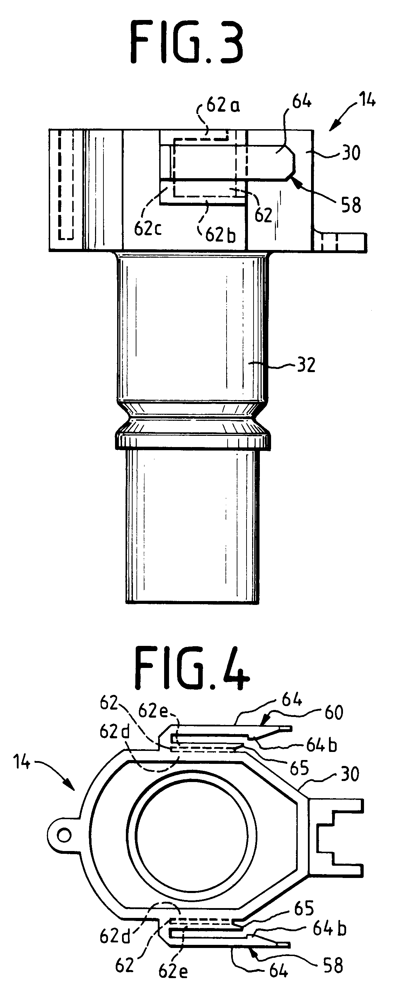

Am oberen Teil 30 des Rahmenträgers 14 sind an gegenüberliegenden Seiten mit den Schenkeln 46, 48 und den Fingern 50, 52 zusammenwirkende Halteelemente 58, 60 vorgesehen, mit denen der Montagerahmen 12 lösbar am Rahmenträger 14 befestigt ist. Die Elemente 58, 60 sind im wesentlichen gleich ausgebildet, und die nachstehend unter besonderer Bezugnahme auf Fig. 8 gegebene Beschreibung des Elementes 60 gilt gleichermaßen auch für das Element 58, wobei gleiche Bezugszeichen jeweils entsprechende Teile der Elemente bezeichnen. Das Element 60 besteht insbesondere aus einer sich waagerecht erstreckenden, seitlich offenen Tasche 62, die jedoch an ihren oberen, unteren und inneren Enden durch Wandteile 62a, 62b, 62c des Teils 30 das Rahmenträgers geschlossen ist, wie dies in Fig. 3 gestrichelt dargestellt ist. Außerdem ist die Tasche an ihren beiden Seiten jeweils durch einen am Teil 30 ausgebildeten inneren Seitenwandungsteil 62d und einen am Teil 30 ausgebildeten äußeren Seitenwandungsteil 62e geschlossen. Die Seitenwandungsteile 62d, 62e sind am besten in Fig. 8 erkennbar. Eine mit dem übrigen Teil 30 des Trägers 14 einstückig ausgebildete Zunge 64 ist mit der Wandung 62e an einem dem seitwärts offenen Eingang 62f (Fig. 8) der Tasche 62 gegenüberliegenden Punkt verbunden. Von diesem Verbindungspunkt aus erstreckt sich die Zunge 64 neben dem Wandteil 62e, jedoch in einem Abstand dazu, nach vorn und endet in einem äußeren Zungenende 64a.

Die Innenfläche der Zunge 64 weist einen Rastanschlag 64b auf, wobei der Abstand zwischen dem Rastanschlag 64b der Zungen der beiden Elemente 58 und 60 so bemessen ist, daß beim Aufsetzen des Montagerahmens 12 auf den Rahmenträger 14 eine Rastverbindung entsteht. Aus der Fig. 8 ist die Anordnung des montierten Rahmens 12 zum Element 60 genauer ersichtlich. Der Finger 52 ist zur Form der Tasche 62 passend bemessen und liegt in der Darstellung sauber in der Tasche 62. Gleichzeitig erstreckt sich die Zunge 64 durch die Öffnung 56 im Schenkel 48 des Rahmens. Der Anschlag 64b befindet sich in einer Lage, in der ein zwischen der Aussparung 56 und dem Finger 52 befindlicher Teil des Schenkels 48 zwischen dem Anschlag 64b und dem "vorderen" oder äußeren Ende 65 des Wandteils 62e am Eingang 62f zur Tasche 62 gehalten ist.

Der Abstand zwischen den den Elementen 58 und 60 jeweils zugeordneten Anschlägen 64b an den Zungen 64 ist etwas kleiner als der Abstand "A" (Fig. 5) zwischen den gegenüberliegenden Innenkanten der Öffnungen 54, 56. Um also den Rahmen 12 in den Rahmenträger 14 einzusetzen, wird der Rahmen 12 zunächst aufrecht auf diesen so aufgesetzt, daß die Schenkel 46, 48 außen neben den freien Enden 64a der Zungen 64 an den Elementen 58, 60 zu liegen kommen. Dann wird der Rahmen 12 in waagerechter Richtung zum Rahmenträger 14 hin bewegt, wobei die Zungen 64 der Elemente 58, 60 in die Öffnungen 54 bzw. 56 an den Schenkeln 46, 48 eintreten. Gleichzeitig werden die Finger 50, 52 in die den Elementen 58 bzw. 60 zugeordneten Taschen 62 eingeführt. Im weiteren Verlauf dieser Bewegung stoßen die Innenkanten der Öffnungen 54, 56 auf innere Schrägflächen 66 der Anschläge 64b, wodurch die äußeren Enden der Zungen 64 auseinandergebogen werden. Diese Bewegung setzt sich solange fort, bis die Schenkel 46, 48 die Anschläge 64b passiert haben und an äußeren Enden 65 der Wandungsteile 62e der beiden Elemente 56, 60 zum Anschlag kommen. Dabei passieren die Schenkel 48 die Anschläge 64b, und die äußeren Enden der Zungen 64 bewegen sich aufgrund ihrer natürlichen Elastizität wieder aufeinander zu in die in Fig. 8 dargestellte Stellung, in der die Schenkel 46, 48 in den Elementen 58, 60 gehalten sind.

Zum Abnehmen des Rahmens 12 vom Rahmenträger 14 werden die Zungen 64 der beiden Elemente 58, 60 von Hand auseinandergedrückt, sodaß die Anschläge 64b die Öffnungen 54, 56 passieren können und der Rahmen 12 abgenommen werden kann, wobei gleichzeitig die Finger 50, 52 aus den Taschen 62 herausgezogen werden.

In der am Träger 14 montierten Stellung des Rahmens 12 sorgen die Finger 50, 52 dafür, daß der Montagerahmen 12 gegen größere Bewegungen gegenüber dem Rahmenträger 14 gesichert ist. Insbesondere Aufwärtsbewegungen des Montagerahmens 12 gegenüber dem Rahmenträger 14 werden durch den Eingriff der Finger 50, 52 mit entsprechenden Wandungsteilen 62a der Elemente 58, 60 verhindert. Desgleichen werden Abwärtsbewegungen durch den Eingriff zwischen den Fingern und den Wandungsteilen 62b der Elemente 58, 60 verhindert, während Bewegungen nach innen oder außen gegenüber dem Träger 14 durch die beschriebene Halterung der Schenkel 46, 48 zwischen den Anschlägen 64b und den äußeren Enden 65 der Wandungen 62e der jeweiligen Elemente 58, 60 ausgeschlossen sind.

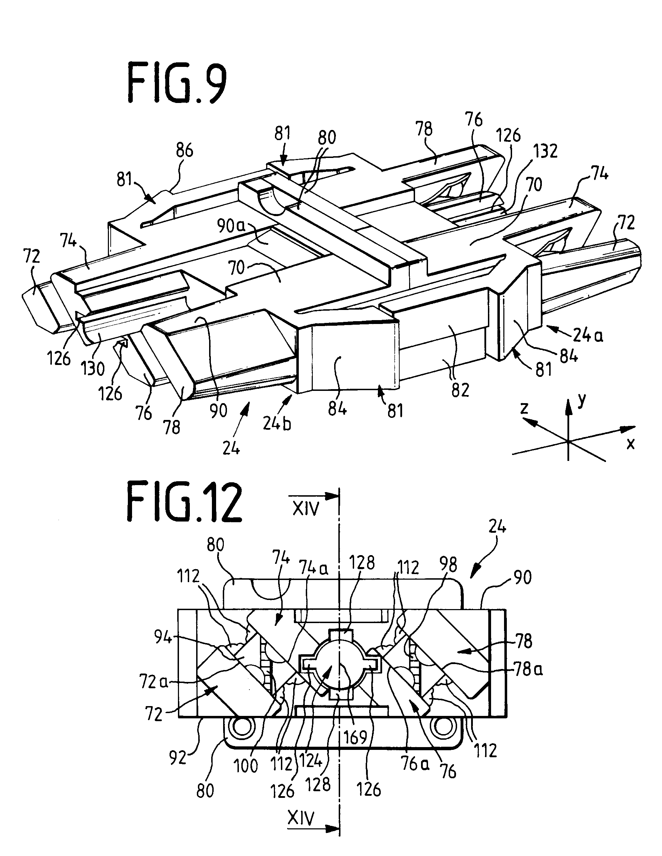

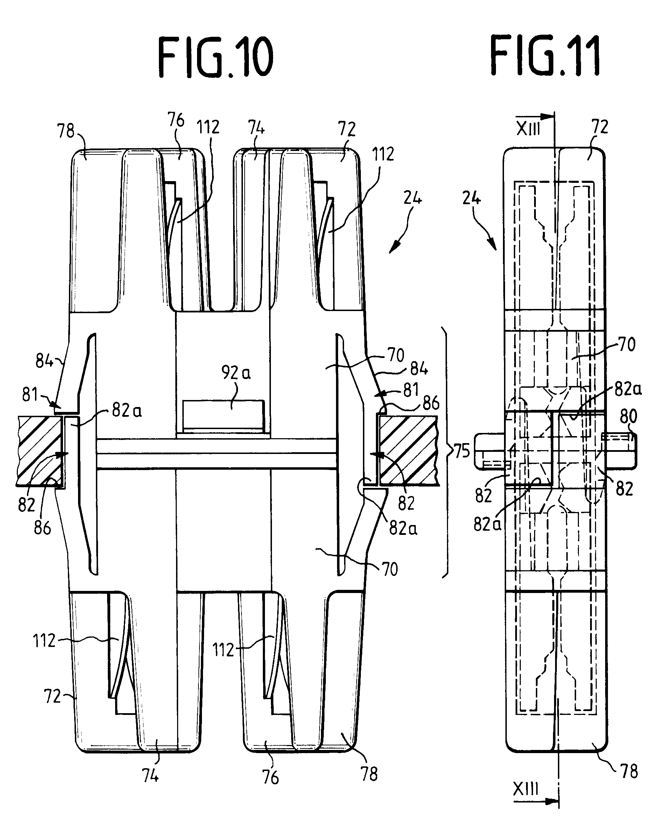

Der in den Fig. 9 bis 14 detailliert dargestellte Verbinder 24 besteht aus zwei elektrisch isolierten, als Kunststoff-Formteile ausgebildeten und miteinander verbundenen Teilkörpern 24a, 24b. Die genannten Kunststoff-Formteile sind gleich ausgebildet und durch einen Schnappverschluß verbunden. In der folgenden Beschreibung werden jeweils gleiche Teile der Teilkörper 24a, 24b mit denselben Bezugszeichen bezeichnet. Die Teilkörper bestehen jeweils aus einem Hauptkörperteil 70, von denen jeweils vier Führungen in Form von Führungsvorsprüngen 72, 74, 76, 78 abstehen. Aus der Querschnitts-Darstellung des Verbinders ist ersichtlich, daß die Körperteile 70 einen dem rechteckigen Querschnitt der Öffnungen 72 im Montagerahmen 12 entsprechenden rechteckigen Querschnitt, jedoch mit etwas geringeren Abmessungen, aufweisen, sodaß ein Verbinder 24 in Längsrichtung des Verbinders 24 - in Fig. 9 als "x"-Achse bezeichnet - in die entsprechende Öffnung 22 eingeschoben werden kann. Zusammen bilden die Körperteile 70 ein Gehäuse 75 (Fig. 10) mit davon beiderseits abstehenden Vorsprüngen 72, 74, 76, 78.

Die beiden Teilkörper 24a, 24b sind durch weiter unten noch beschriebene Mittel mit den Körperteilen 70 aneinanderliegend verbunden, sodaß die Vorsprünge 72, 74, 76 dieser Teile jeweils von der genannten Verbindungsfläche weg gerichtet sind. Die im montierten Zustand der beiden Teilkörper gegebene Ausrichtung des Teils 24b relativ zum Teil 24a wird unter Bezugnahme auf die Achsen "x", "y" und "z" deutlich, die, wie in Fig. 9 dargestellt, jeweils senkrecht aufeinander stehen. Wie bereits erwähnt, entspricht die Achse "x" der Erstreckungsrichtung der Vorsprünge, 72, 74, 76, 78. Die Achse "y" gibt eine "Querrichtung" des Verbinders wieder, während die Achse "z" eine senkrechte oder Hochachse darstellt. Würde der Teilkörper 24a um 180° um die dargestellte "z"-Achse gedreht, so wäre er dann genauso ausgerichtet, wie der Teilkörper 24b in Fig. 9.

Die Körperteile 70 sind an ihrem inneren Ende jeweils mit zwei sich quer dazu in gleicher Ebene erstreckenden Flanschen 80 versehen, und zwar einem an der "oberen" Hauptfläche und einem an der "unteren" Hauptfläche. Die Flanschen 80 am Teilkörper 24a liegen fluchtend an den Flanschen 80 des Teilkörpers 24b an.

Zum Montieren des Verbinders 24 am Montagerahmen 12 wird der Verbinder durch eine Öffnung 22 so eingeführt, daß die Vorsprünge 72, 74, 76, 78 an beiden Enden des Verbinders zunächst durch die Öffnung geschoben werden, bis die Flanschen 80 an dem jeweiligen Teilkörper 24a oder 24b an der Oberfläche des die Öffnung umgebenden mittleren Stegteils 16 zur Anlage kommen.

Die Teilkörper 24a, 24b sind jeweils beiderseits mit nachgiebig verformbaren Rastelementen 81 mit einer Zunge 82 versehen. Diese Zungen besitzen geneigte Außenflächen 84. Beim Einschieben des Verbinders in die Öffnung 22 kommen die seitlichen Flächen der Öffnung 22 zunächst an den Oberflächen 84 der Zunge 82 desjenigen Teilkörper 24a, 24b zur Anlage, der zuerst in die Öffnung 22 eingeführt wird, wodurch die Zungen 82 federnd nach innen gedrückt werden, bis sie im Zuge der weiteren Einschiebebewegung unmittelbar vor dem Punkt, an dem die Flanschen 80 an dem mittleren Stegteil 16 des Montagerahmens 12 zur Anlage kommen, die Öffnung soweit passiert haben, daß die Oberflächen 84 vollständig durch die Öffnung 22 hindurchgetreten sind und auch die einwärts gerichteten Absätze 86 der Zungen 82 die Öffnung passieren. Jetzt können die Zungen 82 nach außen federn, da sie nicht mehr von den Seitenkanten der Öffnungen gehalten werden, und der Verbinder wird dann dadurch in seiner Lage gehalten, daß ein Teil des die Öffnung 22 umgebenden mittleren Stegteils 16 zwischen den Schultern 86 und den Flanschen 80 gehalten wird. Unabhängig davon, ob der Teilkörpcr 24a oder der Teilkörper 24b zuerst durch die Öffnung 22 geschoben wird, tritt jeweils die gleiche Wirkung ein.

Um jedoch anschließend den Verbinder 24 bei Bedarf aus der ihn aufnehmenden Öffnung 22 wieder entfernen und nach außen herausziehen zu können, können die den Flächen 84 gegenüberliegenden freien Enden 82a der Zungen 82 federnd aufeinander zu nach innen gedrückt werden, so daß die Oberflächen 84 sich ebenfalls weit genug nach innen bewegen, damit die Zungen 82 die Öffnung 22 passieren können.

Wie zum Beispiel besonders gut aus Fig. 9 ersichtlich ist, sind die Vorsprünge 72, 74, 76, 78 mit im wesentlichen rechteckigem Querschnitt ausgebildet, aber so angeordnet, daß sich in Längsrichtung erstreckende Seitenflächen der Vorsprünge, u.a. die Seitenflächen 72a, 74a, 76a, 78a an den Vorsprüngen 72, 74, 76, 78, gegenüber den parallelen oberen und unteren Flächen 90 und 92 des jeweiligen Körperteils 70 um 45° geneigt sind. Dadurch entsteht ein Spalt, der zwischen den Vorsprüngen 72 und 74 einen Klemmschlitz 94 ausbildet, sowie ein weiterer Spalt, der zwischen den Vorsprüngen 76, 78 einen weiteren Klemmschlitz 96 ausbildet. Der Klemmschlitz 94 wird durch die Oberflächen 72a, 74a begrenzt, wohingegen der Klemmschlitz 96 durch die Oberflächen 76a, 78a begrenzt wird. Innerhalb dieser jeweiligen Spalte sind elektrisch leitende Kontakte 98, 100 angeordnet.

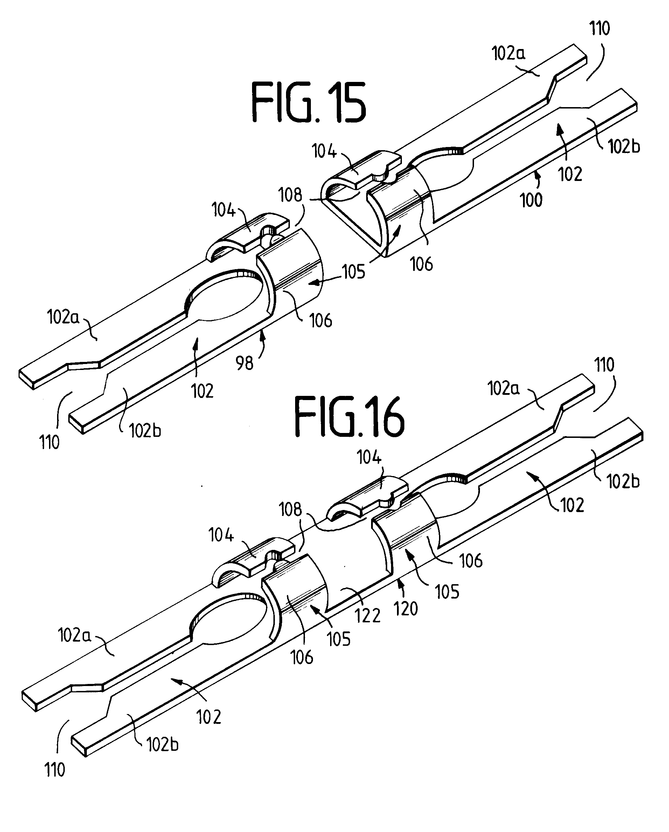

Die Kontakte 98, 100 sind in Form von "Trenn"-Kontakten ausgebildet, wie es Fig. 15 dargestellt ist. Jeder Kontakt besitzt ein ebenes Schneid-Klemm-Kontaktelement 102 von dessen innerem Ende aus sich gegenüberliegende Flansche 104,106 seitlich aus der Ebene des Schneid-Klemm-Kontaktelementes 102 heraus so erstrecken, daß sie zusammen mit dem ebenen Schneid-Klemm-Kontaktelement 102 im Querschnitt gesehen die dargestellte, im wesentlichen C-förmige Gestalt ausbilden. Die freien Enden der Flansche 104,106 stehen sich in geringem Abstand so gegenüber, daß zwischen ihnen ein Spalt 108 ausgebildet ist. Die Flansche 104,106 bilden jeweils den inneren Kontaktteil 105 des betreffenden Kontaktes 98,100, dessen Zweck nachstehend noch eingehend beschrieben wird. Das Schneid-Klemm-Kontaktelement 102 ist gabelförmig mit zwei parallelen Schenkeln 102a,102b ausgebildet, zwischen dcnen ein zum äußeren Ende des betreffenden Kontaktes, d.h. zu dem den Flanschen 104,106 gegenüberliegenden Ende hin offener Kontaktschlitz 110 ausgebildet wird.

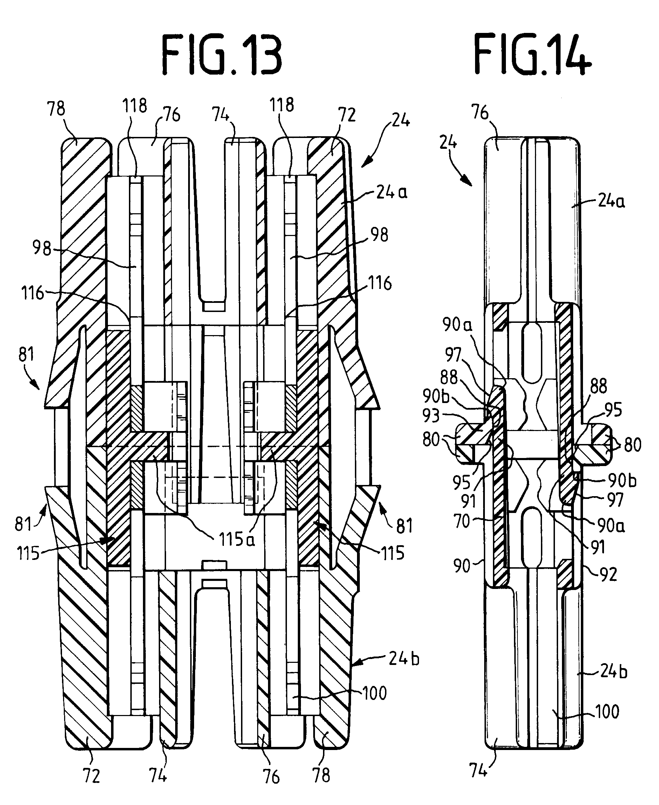

Die Flansche 104,106 und das angrenzende Schneid-Klemm-Kontaktelement 102 sind innerhalb des Hauptkörperteils 70 des betreffenden Teilkörpers 24a,24b gehalten, wobei das Schneid-Klemm-Kontaktelement 102 jeweils zwischen den Vorsprungpaaren 76,78 bzw. 72,74 nach außen herausragt. Die Mittelebene des Schneid-Klemm-Kontaktelementes 102 der Kontakte 98,100 erstreckt sich jeweils in Richtung der Fig. 9 angegebenen Z-Achse, ist jedoch gleichzeitig relativ zu gegenüberliegenden Flächenpaaren 72a,74a bzw. 76a,78a der jeweiligen Vorsprünge 72,74;76,78, zwischen denen sich die Kontakte 98,100 erstrecken, in einem Winkel von 45° angeordnet. Damit sind die zuvor erwähnten, durch diese Flächenpaare gebildeten Klemmschlitze 94,96 jeweils ebenfalls in einem Winkel von 45° zu den Mittelebenen der Schneid-Klemm-Kontaktelemente 102 der Kontakte 98,100 und auch in einem Winkel von 45° zur waagerechten Mittelebene des Verbinders 24 geneigt. Damit die Kontakte 98,100 so gehalten werden können, sind die Vorsprünge 92,94,96,98 mit Längsschlitzen 118 (Fig.13) zur Aufnahme der Außenkanten der Schneid-Klemm-Kontaktelemente 102 versehen. Auf diese Weise werden die Kontakte 98 in den Klemmschlitzen 94,96 an einem Ende des Verbinders 24 und die Kontakte 100 in Klemmschlitzen 94,96 am anderen Ende des Verbinders 24 gehalten.

Die Schneid-Klemm-Kontaktelemente 102 der Kontakte 98,100 sind in bekannter Weise in einer für die Verbindung mit isolierten elektrischen Leitern geeigneten Weise angeordnet, wobei die Verbinder zwischen ein Vorsprungspaar 72,74;76,78 eingesetzt sind und der Draht in der in Fig. 12 gezeigten Darstellung vom Ende des Verbinders parallel zu den Flächen 72a,74a;76a,78a verläuft und wobei die Kontaktschlitze 110 so bemessen und die Schenkel 102a,102b so ausgebildet sind, dah die Schenkel 102a,102b beim Eindrücken des Drahtes in den Kontaktschlitz 110 in die Isolierung des Drahtes einschneiden und die elektrische Verbindung zwischen dem Kontakt 98,100 und dem Draht herstellen. wie bereits erwähnt, sind zwischen den Vorsprungspaaren 72,74;76,78 Klemmschlitze 94,96 ausgebildet, die das Einführen des Drahtes in die zugeordneten Kontakte 98,100 erleichtern. Damit der Draht leichter gehalten werden kann, sind die gegenüberliegenden Flächen 72a,74a;76a,78a der Vorsprünge 72,74;76,78 jeweils mit Klemmrippen 112 ausgestattet, die an gegenüberliegenden Seiten der Drahtisolierung angreifen. In der Praxis erfolgt das Einführen der Drähte am zweckmäßigsten unter Verwendung des im australischen Patent Nr. 547,489 beschriebenen Werkzeugs.

Durch das beschriebene Zusammenfügen der beiden Teilkörper 24a,24b verlaufen die Klemmschlitze 94,96 an einem des Verbinders 24 - in Längsrichtung des Verbinders (d.h. entlang der "x"-Achse) gesehen - in einem Winkel von 90° zu den Klemmschlitzen 94,96 am anderen Ende. Dadurch werden durch das Abklemmen von Drähten an den jeweiligen Enden des Verbinders erzeugte Torsionswirkungen gegenseitig aufgehoben, da diese Torsionskräfte entlang der Kontakte 98,100 oder entlang weiter unten noch beschriebener alternativer Kontakte 120 übertragen werden.

Die Art der Verbindung der beiden Teilkörper 24a,24b ist besonders gut in Figur 14 ersichtlich. wie bereits beschrieben, liegen die beiden Teilkörper 24a,24b mit den Flanschen 80 aneinander an. Die Haupt-Körperteile 70 sind jeweils an ihren Hauptflächen mit Ausnehmungen 88 versehen. Von den Bereichen 70 stehen federnde Rastzungen 91 ab; diese haben vergrößerte, nach außen gerichtete hakenförmige Endbereiche 90a, die an den Flächen 90b hinter quer angeordnete, an den Bereichen 70 neben den Ausnehmungen 88 ausgebildete Rastteile 93 einrasten.

Das Einrasten der Teilkörper 24a, 24b erfolgt in der Weise, daß die beiden Teilkörper so aufeinander zu bewegt werden, daß die Bereiche 90a der Rastzungen 91 in die Ausnehmungen 88 gelangen und mit den querliegenden Rastteilen 93 der beiden Teilkörper 24a, 24b in Eingriff kommen. Dabei kommen geneigte Außenflächen 97 der Bereiche 90a mit geneigten, einwärts gerichteten Flächen 95 der Bereiche 93 in Eingriff und drücken die Enden der Rastzungen durch eine Art Nockenwirkung federnd nach innen und aufeinander zu, bis beim Zusammenschieben der Flanschen 80 der beiden Teilkörper die Bereiche 90a der Rastzungen 91 die querliegenden Rastteile 93 passieren und die freien Enden der Rastzungen unter ihrer natürlichen Federwirkung sich wieder nach außen bewegen, so daß die Bereiche 90a hinter den querliegenden Rastteilen 93 einrasten. Im montierten Zustand werden die Teilkörper 24a, 24b dadurch zusammengespannt, daß eine Bewegung der beiden Teilkörper voneinander weg durch den Eingriff der nach innen gestuften Flächen 90b an den Rastbereichen 90a mit dem querliegenden Rastteil 93 begrenzt wird, während eine Bewegung der beiden Teilkörper aufeinander zu durch die Anlage der Flanschen 80 der beiden Teilkörper 24a, 24b ausgeschlossen wird.

Ein Trennen der beiden Teilkörper 24a, 24b ist jedoch dadurch möglich, daß die Endbereiche 90a der beiden Rasten 91 in geeigneter Weise einwärts bewegt werden, so daß die Endbereiche durch entsprechende Bewegung unter den querliegenden Rastteilen 93 aus den Öffnungen 88 freikommen. Vor dem Zusammenbau der beiden Teilkörper 24a, 24b können die Kontakte 98, 100 von Öffnungen an den inneren Enden der Teile 70 aus in die Teilkörper eingeschoben werden, so daß sie durch Öffnungen 116 am entgegengesetzten Ende des jeweiligen Teils 70, das heißt also dem Ende, von dem auch die Vorsprünge 72, 74, 76, 78 ausgehen, herausragen. Wie bereits beschrieben befinden sich dann die Teile 102 der Kontakte jeweils zwischen Vorsprungpaaren 72, 74 oder 76, 78. Obwohl die Kontakte in Schlitzen 118 in den Flächen 72a, 74a, 76a, 78a der Vorsprünge gleiten und dort auch in ihrer Lage gehalten werden, können sie aus diesen Schlitzen nicht völlig herausgleiten, da die Schlitze 118, wie in Figur 13 dargestellt, kurz vor den freien Enden der Vorsprünge enden.

Nach innen ist die Bewegung der Kontakte 98,100 durch jeweils zu beiden Seiten des Verbinders 24 eingefügte Sicherungsteile 115 begrenzt. Die Sicherungsteile 115 werden vor dem Zusammensetzen der beiden Teilkörper in Öffnungen neben den die Kontakte 98 oder 100 eines der Teilkörper 24a, 24b aufnehmenden Öffnungen eingesetzt und dann beim Zusammenfügen der beiden Teilkörper zur Vervollständigung der Montagegruppe in die entsprechenden Öffnungen am jeweils anderen Teilkörper eingeschoben. An den Sicherungsteilen 115 vorgesehene, seitwärts weisende Bereiche 115a kommen dabei zwischen den inneren Enden der fluchtenden Kontaktpaare 98, 100 zu liegen und trennen auf diese Weise jeweils die Kontakte eines Paars.

Figur 16 zeigt einen alternativen "Verbindungs-"Kontakt 120, der statt des zuvor beschriebenen Paares von Trennkontakten 89, 100 in einem Verbinder 24 angeordnet werden kann. Der Kontakt 120 entspricht in seiner grundsätzlichen Ausbildung zwei an ihren Enden verbundenen Trennkontakten 98, 100. Die Verbindungskontakte 120 besitzen also jeweils entgegengesetzt gerichtete ebene Teile 102, die in gleicher Weise wie die Teile 102 der Kontakte 98, 100 geschlitzt sind und zwei Paar Flanschen 104, 106 aufweisen, die jeweils einen getrennten inneren Kontaktteil 105 des Kontaktes 120 ausbilden. An den inneren Enden sind die beiden Teile 102 jedoch über einen Zwischenbereich 122 des Verbindungskontakts 120 miteinander verbunden. Zwischen den freien Enden der Flanschen 104, 106 sind in derselben Weise wie bei den Trennkontakten beschrieben Spalten 108 ausgebildet. Bei in den Verbinder 24 eingelegten Trennkontakten 98, 100 besteht keine elektrische Verbindung zwischen den einzelnen Kontakten 98 und den damit am gegenüberliegenden Ende des Verbinders fluchtenden Kontakten 100. Wenn jedoch ein Verbindungskontakt 120 eingelegt ist, wird eine Verbindung zwischen den an den gegenüberliegenden Enden des Verbinders 24 hergestellten elektrischen Anschlüssen hergestellt. Es können entweder alle Kontaktpaare 89, 100 oder auch nur einzelne Kontaktpaare 98, 100 des Verbinders 24 durch Kontakte 120 ersetzt werden.

Der Verbinder 24 besitzt eine zentrale, in Längsrichtung verlaufende Durchgangsöffnung 124, die sich entlang der Längsachse 169 durch die gegenüberliegenden Körperteile 70 erstreckt und jeweils in den Oberflächenbereichen zwischen den Vorsprungpaaren 74, 76 endet. Wie am besten aus Figur 12 ersichtlich, ist die Öffnung 124 im wesentlichen zylindrisch ausgebildet, jedoch mit gegenüberliegenden, in Längsrichtung verlaufenden, in ihrer Umfangsfläche ausgebildeten, in der in Figur 12 dargestellten Ansicht zu beiden Seiten angeordneten Schlitzen 126 und ferner mit gegenüberliegenden "oberen" und "unteren" Schlitzen 128 versehen, die sich ebenfalls in Längsrichtung der Öffnung erstrecken. Der Durchmesser der Öffnung 124 ist etwas größer als der Abstand zwischen den Vorsprüngen 74, 76, und die Öffnung setzt sich in Längsrichtung an den gegenüberliegenden Flächen fort, in dem sie daran konkave zylindrische Flächen 130, 132 ausbildet. Außerdem sind in diesen Flächen Bereiche vorgesehen, die die Fortsetzung der Schlitze 126 bilden. Die Schlitze 128 dagegen münden zwischen den Vorsprüngen 74,76 in den Stirnflächen des Bereichs 70.

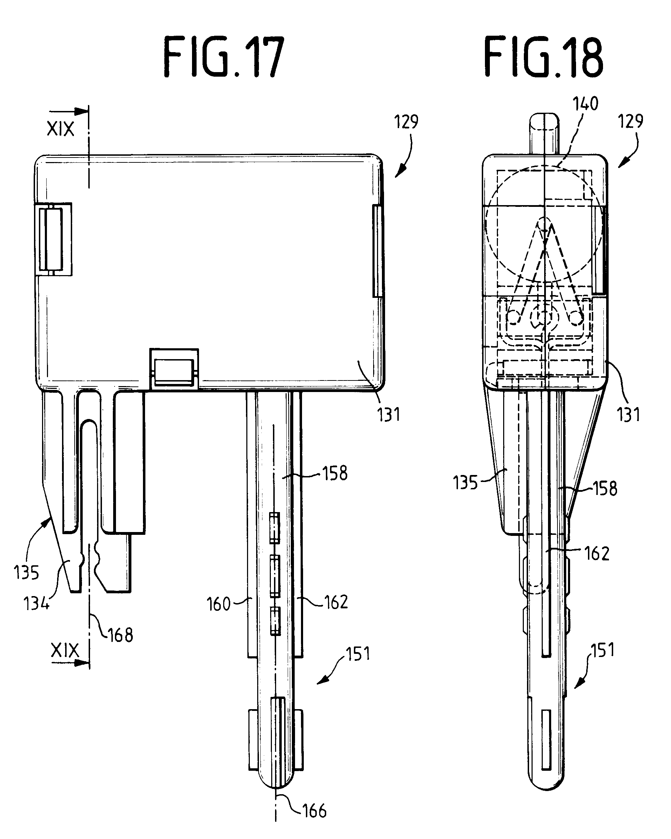

Die Schlitze 126 fluchten mit den Spalten 108 zwischen den gegenüberliegenden Flanschen 104,106 an den Kontakten 98,100 oder 120, so daß - wie dies nachstehend beschrieben wird - an den Kontakten elektrische Anschlüsse für die verschiedensten Zwecke hergestellt werden können. Fig.17 zeigt insbesondere ein elektrisches Bauteil mit einer Überspannungsschutzeinheit 129, die auf diese Weise angeschlossen werden kann. Die Überspannungsschutzeinheit 129 ist im wesentlichen als hohles kastenförmiges Gehäuse 131 ausgebildet, das zum Deispiel aus zwei in geeigneter Weise, zum Beispiel durch Schnappverschlüsse, miteinander verbundenen Hälften bestehen kann.

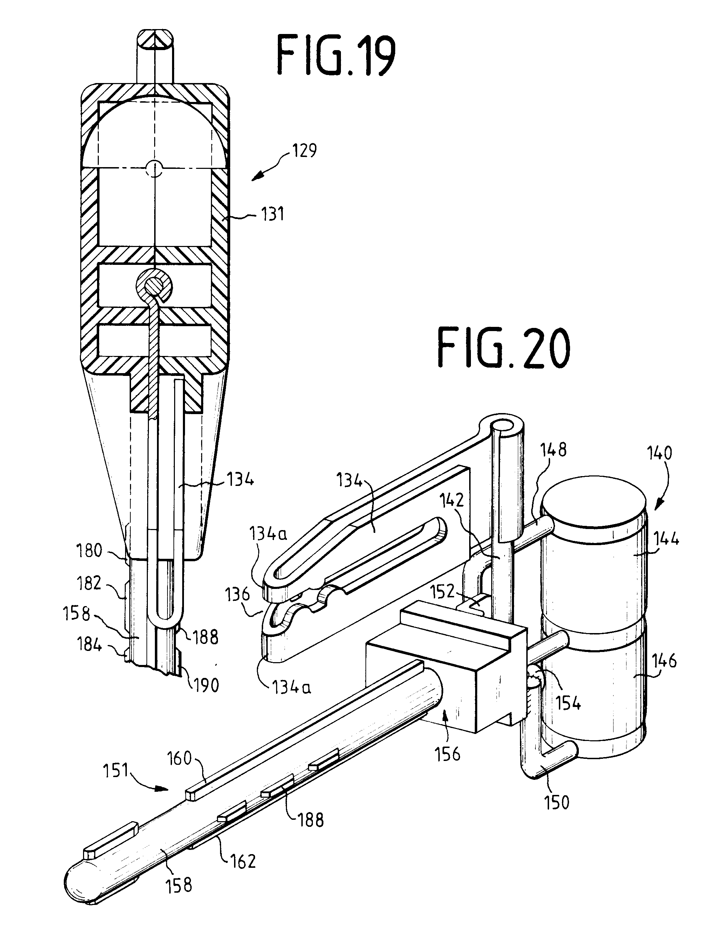

Von einer Fläche des Gehäuses 131 aus erstreckt sich ein Formvorsprung 135, der ein elektrisches Kontaktelement 134 trägt. Dieses Element 134 ist langgestreckt, streifenförmig ausgebildet und - von der Seite gesehen - im wesentlichen U-förmig gebogen. Dies ist am besten aus den Fig.19 und 20 ersichtlich, wobei in Fig. 20 die inneren Bauteile der Überspannungsschutzeinheit 129 dargestellt sind. Das Element 134 besitzt an seinem äußeren Ende einen nach außen offenen Schlitz 136, wodurch zu beiden seiten des Schlitzes Schenkel 134a,134b ausgebildet werden. Das Element 134 ist leicht nachgiebig ausgebildet und zur Aufnahme eines der Flanschen 18,20 am Montagerahmen 12 und damit zur Herstellung eines elektrischen Anschlusses in der Lage.

Innerhalb des Gehäuses 131 ist ein Überspannungsschutzgerät 140 derart angeordnet, daß zwei Überspannungsschutzgeräte 144,146 in Längsrichtung nebeneinander liegen. Das Kontaktelement 134 ist über einen geeigneten elektrischen Leiter 142 an die Verbindung zwischen den beiden Geräten 144,146 angeschlossen.

Die nicht an den Leiter 142 angeschlossenen Enden der Geräte 144, 146 sind über besondere Leiter 148, 150 über Klemmen 152, 154 eines Verbinderelementes 151 verbunden. Das Element 151 besteht aus einem Montageteil 156 und einem davon nach außen abstehenden,langgestreckten zylindrischen Bereich 158. Der Montagebereich 156 dient als Halterung für das Gehäuse 131 und wird in einer komplementären Öffnung in der Außenwandung des Gehäuses 131 aufgenommen. In dieser Montagelage verläuft der Vorsprung 158 vom Gehäuse ausgehend parallel neben dem Kontakt 134, jedoch in einem gewissen Abstand dazu.

An dem Vorsprung 158 sind in Längsrichtung gegenüberliegend angeordnete, langgestreckte rippenförmige seitliche Kontaktelemente 160, 162 vorgesehen, die in an den Außenflächen vorgesehenen längsgerichteten Schlitzen gehalten werden und die Verbindung zu den jeweiligen Klemmen 152, 154 herstellen. Wie aus der Zeichnung ersichtlich, erstrecken sich die Kontaktelemente jeweils in gleicher Weise von der Oberfläche des Vorsprungs 158 über den größten Teil seiner Länge. Jedoch stehen die Elemente 160, 162 nicht über die gesamte Länge von der Oberfläche des Vorsprungs 158 ab. Insbesondere weist jedes Element einen Teilbereich 160a bzw. 162a auf, der sich von dem Montageteil 156 über etwa zwei Drittel der Länge des Vorsprungs 158 erstreckt. An diesem Punkt befindet sich in den Kontaktelementen 160, 162 jeweils eine Ausnehmung 160b, 162b, in deren Bereich die Kontaktelemente nicht über die Oberfläche des Vorsprungs 158 herausragen. Anschließend an die Ausnehmungen sind angrenzend an das freie Ende des Vorsprungs 158 jeweils Endbereiche 160c,162c der Elemente 160, 162 vorgesehen, die wiederum aus der Mantelfläche des Vorsprungs 158 herausragen.

Außerdem besitzt der Vorsprung 158 an diametral gegenüberliegenden und - in axialer Richtung des Verbindungselementes 151 gesehen - zu den Positionen der Elemente 160, 162 um 90° versetzten Stellen gegenüberliegende, einstückig ausgebildete, nicht leitende, rippenförmige keilverbindungs-Vorsprünge 180, 182, 184, 186, 188, 190. Die Vorsprünge 180, 182, 184 sind in Längsrichtung im Abstand zueinander auf dem Vorsprung 158 etwa im mittleren Drittel der Länge des Vorsprungs 158 angeordnet. Die Vorsprünge 186, 188 und 190 sind in gleicher Weise, jedoch den Vorsprüngen 180, 182, 184 jeweils diametral gegenüberliegend, angeordnet.

In der Draufsicht gemäß Figur 17 ist der Abstand zwischen der Achse 166 des Vorsprungs 158 und der Achse 168 des Elementes 134 so bemessen, daß er jeweils dem Abstand zwischen der Mittelebene der Flanschen 18, 20 am Montagerahmen 12 und der Achse 168 der Öffnung 124 im Verbinder 24 entspricht, wenn letzterer sich in einer Öffnung 22 neben dem betreffenden Flansch 18, 20 befindet.

Im Querschnitt gesehen weist der Vorsprung 158 zum Beispiel an einem Punkt, an dem beide Elemente 160, 162 von seiner Oberfläche abstehen und ein Paar der diametral gegenüberliegenden Vorsprünge 180, 186 oder 182, 188 oder 184, 190 vorhanden ist, einen zum Querschnitt der oben beschriebenen Öffnung 124 in einem Verbinder 24 komplementären Querschnitt auf. Damit kann die Einheit 129 in der Weise am Rahmen 12 angebracht werden, daß die Einheit 129 so auf den Rahmen zu bewegt wird, daß einer der Flanschen 18, 20 in den Schlitz 136 im Element 134 eingeführt und vom Element 134 ergriffen wird, während gleichzeitig der Vorsprung 158 unter Aufnahme der Elemente 160, 162 in den gegenüberliegenden Schlitzen 126 der Öffnung 124 in die Öffnung 124 eingeführt wird, wobei die Vorsprunggruppen 180, 182, 184 bzw. 186, 188, 190 jeweils gleitend in den zugehörigen Schlitzen 128 aufgenommen werden.

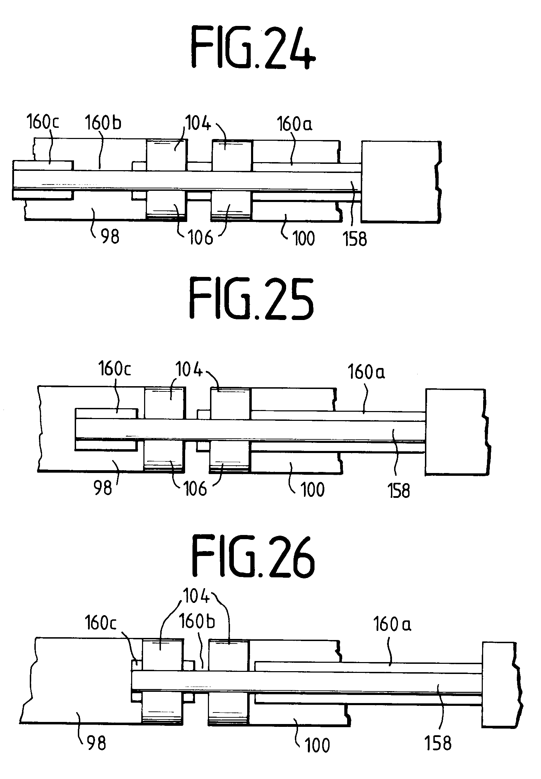

Die Stärke der Elemente 160, 162 ist so gewählt, daß die Elemente jeweils den Schlitz 108 zwischen den gegenüberliegenden freien Enden der Flanschen 104, 106 der beiden nebeneinanderliegenden Trennkontakte 98, 100 oder des Verbindungskontaktes 120 in einem Verbinder 24 passieren und die elektrische Verbindung mit den inneren Kontaktteilen 105 der Kontakte 98, 100 oder 120 herstellen können, indem sie an den freien Enden der Flanschen 104, 106 angreifen und diese gleitend nachgiebig auseinanderbiegen. Die genaue Anordnung der Kontaktgabe kann jedoch in der Weise variiert werden, daß die Eindrücklänge der Einheit 129 in einen Verbinder 24 und damit das Maß, um das der Vorsprung 158 in die Öffnung 124 eingeführt wird, verändert wird. In den Figuren 24, 25 und 26 ist dargestellt, welche Auswirkungen unterschiedliche Ausmaße der Vorsprünge bei zwei zu einer seite eines Verbinders 24 hintereinander angeordneten Trennkontakten 98, 100 haben. Dabei versteht es sich, daß eine gleichartige Verbindung auch bei Anordnung der beiden Trennkontakte 98, 100 an der anderen Seite des Verbinders 24 erzielt würde. Figur 26 insbesondere zeigt die Situation bei einem Vorsprung geringsten Ausmaßes. Hier befindet sich die Ausnehmung 160b des Elementes 160 angrenzend an die Flanschen 104, 106 eines "vorderen" Trennkontaktes 100 (das heißt des Kontaktes am Ende des Verbinders 24, in den der Vorsprung 158 eingeführt wurde), während der Bereich 160c in den Spalt zwischen den freien Enden der Flanschen 104, 106 eines "rückwärtigen" Trennkontaktes 100 eingedrückt und damit der Kontakt zu diesem Kontakt hergestellt ist. In diesem Zustand ist also eines der beiden Überspannungsschutzgeräte 144, 146 mit dem Trennkontakt 100 und Erde (das heißt dem Rahmen 12) parallelgeschaltet, während keine derartige Verbindung vom Trennkontakt 98 über das andere der Geräte 144, 146 hergestellt ist.

Fig. 25 zeigt einen Zustand, bei dem bei weiterer Einwärtsbewegung des Vorsprungs 158 die Ausnehmung 160b angrenzend an die Flanschen 104, 106 des rückwärtigen Trennkontaktes 100 zu liegen kommt, während zwischen dem Bereich 160a und dem vorderen Trennkontakt 98 der Kontakt hergestellt wird. Auf diese Weise wird dann das andere der beiden Geräte 144, 146 mit dem Trennkontakt und Erde verbunden, während keine entsprechende Verbindung zum Trennkontakt 100 hergestellt wird.

Wenn schließlich der Vorsprung 158 ganz in den Verbinder 24 eingedrückt wird, stellt der etwas längere Bereich 160a den Kontakt mit beiden Trennkontakten 98, 100 her, so daß beide Vorrichtungen 144, 146 von den Trennkontakten 98, 100 an Erde gelegt werden.

Die Vorsprünge 180, 182, 184, 186, 188 und 190 dienen in Verbindung mit einer (nicht dargestellten) Raste innerhalb des Verbinders 24 zum Einrasten der drei beschriebenen Positionen.

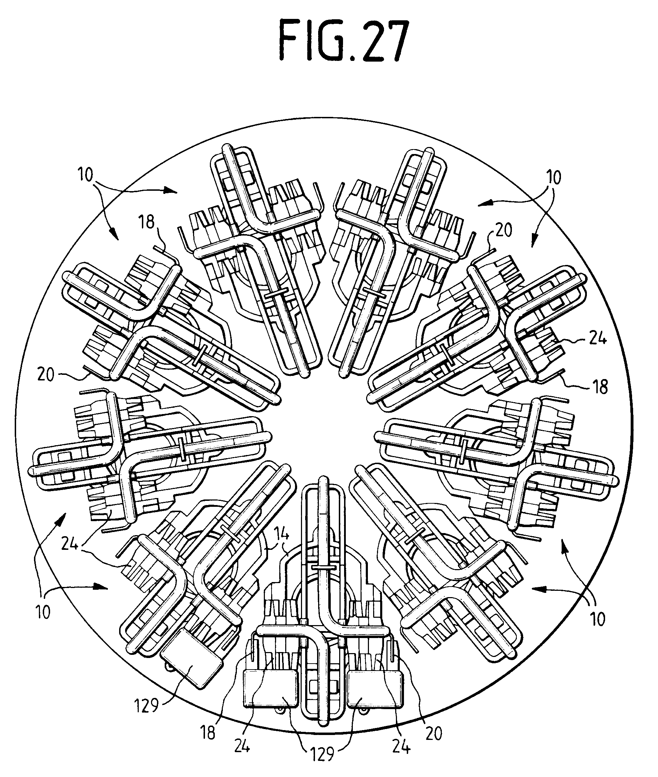

Die beschriebene Anordnung macht es möglich, eine Vielzahl von Anschlußeinheiten 100 in kreisförmiger Anordnung parallel zu schalten, wie in Fig. 27 dargestellt. Bei dieser Anordnung sind die "rückwärtigen" Flächen der Rahmen 12 nach innen weisend und die Flanschen 18, 20 nach außen weisend angeordnet. Die Verbindungen von einer Vermittlungsstelle über die oben beschriebenen Kabelpaare 42 können an den rückwärtigen Flächen der Rahmen 12 hergestellt werden, insbesondere an den Enden der Verbinder 24, die nach der Montage an den Rahmen durch diese hindurch nach innen vorstehen. Dann können an den "äußeren" Flächen der Rahmen 12 Überbrückungsdrähte zwischen den Kontakten 98, 100 oder 120 der Verbinder vorgesehen werden. Gemäß Fig. 1 können zur besseren Halterung der für die Herstellung der weiter oben beschriebenen Anschlüsse verwendeten Drähte U-förmige Halteelemente 170, 172 und ein vertikaler Ständer 174 vorgesehen werden.

In der beschriebenen Anordnung können die Rahmen 12 von den Rahmenträgern 14 am unteren Ende gelöst und nach aussen geneigt werden, indem sie insgesamt um ihre unteren Enden geschwenkt werden, so daß die an den Innenflächen der Rahmen 12 liegenden Seiten der Verbinder leicht zugänglich werden.

Gemäß einer nicht dargestellten alternativen Ausführungsform sind die Rahmen 12 an ihren unteren Enden schwenkbar mit den Rahmenträgern 14 verbunden.

## Patentansprüche

1. Anschlußeinheit für Kabelpaare der Fernmeldetechnik mit elektrischen Verbindern aus jeweils zwei Kunststoffkörpern und aus in diese eingesetzten Schneid-Klemm-Kontaktelementen, deren Kontaktschlitze in Klemmschlitzen für die Kabelpaare hineinragen, und mit einem Montagerahmen zur Aufnahme der elektrischen Verbinder,
wobei jeder Teilkörper (24a,24b) identisch ausgebildet ist und ein Paar von Schneid-Klemm-Kontaktelementen (102) aufnimmt,
jeder Teilkörper (24a,24b) auf seiner den Klemmschlitzen (94,96) entgegengesetzten Basisfläche Verbindungselemente (88,91) zur Verbindung zweier Teilkörper (24a,24b) unter Ausbildung eines Gehäuses (75) aufweist und
wobei das Gehäuse (75) auf zwei gegenüberliegenden Außenflächen mit Rastanordnungen (81) versehen und lösbar in einer Öffnung (22) des Montagerahmens (12) so einrastbar ist, daß die beiden Teilkörper (24a,24b) beiderseits aus dem Montagerahmen (12) herausragen.

2. Anschlußeinheit nach Anspruch 1, wobei
das Gehäuse (75) durch miteinander verbundene Gehäuseteile (70) der Teilkörper (24a,24b) gebildet ist,
die Teilkörper (24a,24b) durch die Verbindungsmittel bildende, zusammenwirkende Öffnungen (88) und Rastzungen (91) zusammengehalten sind und wobei
jeder Teilkörper (24a,24b) jeweils mit einer Öffnung (88) und mit einer Rastzunge (91) versehen ist.

3. Anschlußeinheit nach Anspruch 1 oder 2, wobei
die Klemmschlitze (94,96) für die Kabelpaare (42) jeweils zwischen einem Paar von Führungsvorsprüngen (72,74;76,78) ausgebildet sind, die in einem Winkel von etwa 45° zu einer sich in Längsrichtung des Verbinders (24) erstreckenden Mittelebene ((14-14)/Fig. 12) angeordnet sind, so daß die Schneid-Klemm-Kontaktelemente (102) parallel zur Mittelebene des Verbinders (24) verlaufen.

4. Anschlußeinheit nach einem der Ansprüche 1 bis 3, wobei
die zwischen jeweils einem Paar von Führungsvorsprüngen (72,74;76,78) ausgebildeten Klemmschlitze (94,96) in einem Winkel von etwa 90° zu den jeweils zwischen dem anderen Paar von Führungsvorsprüngen ausgebildeten Klemmschlitzen (96) verlaufen.

5. Anschlußeinheit nach einem der Ansprüche 1 bis 4, wobei
in dem Gehäuse (75) des aus zwei Teilkörpern (24a,24b) gebildeten elektrischen Verbinders (24) eine Öffnung (124) vorgesehen ist, durch die ein elektrisches Bauteil mit einem sich nach außen erstreckenden, ein seitliches Kontaktelement (160) tragenden Vorsprung (158) zur Herstellung einer Verbindung mit einem innen angeordneten, mit mindestens einem der Schneid-Klemm-Kontaktelemente (102) elektrisch gekoppelten Kontaktteil (105) einführbar ist.

6. Anschlußeinheit nach Anspruch 5, wobei
die Schneid-Klemm-Kontaktelemente (102) in Längsrichtung des elektrischen Verbinders (24) ausgerichtet sind und wobei
an den Schneid-Klemm-Kontaktelementen (102) jeweils ein innen angeordnetes elektrisches Kontaktteil (105) ausgebildet und so positioniert ist, daß das seitliche Kontaktelement (160) wahlweise mit einem der Schneid-Klemm-Kontaktelemente (102) oder mit beiden Schneid-Klemm-Kontakten (102) kontaktierbar ist, je nachdem wieweit der Vorsprung (158) des elektrischen Bauteils in die Öffnung (124) eingeführt ist.

7. Anschlußeinheit nach einem der Ansprüche 1 bis 6, wobei
der Montagerahmen (12) in einem Rahmenträger (14) montiert ist, der sich zur Aufnahme der Kabelpaare vertikal erstreckt, die ihrerseits vertikal zu den clcktrischen Kontakten (98,100;120) der elektrischen Vcrbinder (24) geführt sind, und wobei
der Montagerahmen (12) unter Durchbiegung der Kabelpaare (42) neben dem Rahmenträger (14) durch Lösen der Verbindung zwischen dem Montagerahmen (12) und dem Rahmenträger (14) verschwenkbar ist, wodurch eine elektrische Verbindung mit dem Kontakt an der dem Rahmen (12) gegenüberliegenden Seite von einem Punkt an einer Seite der Anschlußeinheit (10) aus zugänglich wird.

8. Anschlußeinheit nach Anspruch 7, wobei
an dem Rahmenträger (14) seitlich angeordnete Halteelemente (58,60) zur lösbaren Aufnahme des Montagerahmens (12) gelagert sind, wobei der Montagerahmen (12) abwärtsweisende Schenkel (46,48) mit darin vorgesehenen Öffnungen (54,56) besitzt und die Halteelemente (58,60) nachgiebige Zungen (64) aufweisen, die durch eine Bewegung des Montagerahmens (12) in diese Öffnungen (54, 56) einführbar sind, wodurch die Zungen (64) nachgiebig verformbar sind, bis ein Rastzustand erreicht ist, in dem Anschläge (64b) an den nachgiebigen Zungen (64) den Montagerahmen (12) an dem Rahmenträger (14) sichern.

9. Anschlußeinheit nach Anspruch 8, wobei
die Halteelemente (58,60) Taschen (62) besitzen und daß der Montagerahmen (12) mit Fingern (50) ausgestattet ist, die während der Bewegung des Montagerahmens (12) zum Einführen der Zungen (64) in die Öffnungen (54,56) in die Taschen (62) in den Halteelementen (58,60) einführbar sind und damit den Montagerahmen (12) am Rahmenträger (14) fixieren.

10. Anschlußeinheit nach Anspruch 9, wobei
der Montagerahmen (12) rinnenförmig ausgebildet ist und einen mittleren Stegteil (16) sowie gegenüberliegende Flansche (18,20) aufweist, wobei die Schenkel (46,48) beiderseits einer Ausnehmung (44) an einem Ende des Montagerahmens (12) ausgebildet sind und beiderseits der Ausnehmung (44) befindliche Teile des Stegteils (16) des Montagerahmens (12) mit einschließen, in denen die Öffnungen (54,56) vorgesehen sind.

11. Anschlußeinheit nach Anspruch 10, wobei
der Stegteil (16) an gegenüberliegenden Innenkanten der Schenkel (46,48) aus der Ebene des übrigen Bereichs des Stegteiles (16) zur Ausbildung von Fingern (50,52) abgebogen ist, wobei die Finger (50,52) sich im wesentlichen parallel zu den Flanschen (18,20), jedoch an der den Flanschen (18,20) gegenüberliegenden Seite des Stegteils (16) erstrecken.

12. Anschlußeinheit nach einem der Ansprüche 7 bis 11, wobei
im Stegteil (16) des Montagerahmens (12) Befestigungsöffnungen (22) in reihenförmiger Anordnung in Längsrichtung des Montagerahmens (12) vorgesehen sind, wobei jeweils eine Reihe neben den Flanschen (18,20) angeordnet ist und die elektrischen Verbinder (24) lösbar in diesen Befestigungsöffnungen (22) montierbar sind.

13. Anschlußeinheit nach einem der Ansprüche 1 bis 12, wobei
ein elektrisches Bauteil zur Herstellung einer elektrischen Verbindung mit den Schneid-Klemm-Kontaktelementen (102) des Verbinders (24) dadurch an die Flansche (18,20) des Montagerahmens (12) angeschlossen werden kann,
ein Vorsprung (158) des elektrischen Bauteils in die Öffnung (124) eingefügt und die Verbindung durch die Anlage eines seitlichen Kontaktelementes (160) des Vorsprunges (158) des elektrischen Bauteils an einem inneren Kontaktteil (105) im Gehäuse (75) des Verbinders (24) hergestellt wird, wobei ein angrenzender Flansch (18,20) des Montagerahmens (12) relativ zu dem Verbinder (24) so angeordnet ist, daß während des Einfügens eine weitere elektrische Verbindung dadurch herstellbar ist, daß der betreffende Flansch (18,20) mit einem weiteren, an dem elektrischen Bauteil vorgesehenen Kontaktelement (134) in Eingriff kommt.

14. Anschlußeinheit nach einem der Ansprüche 1 bis 13, wobei
die Schneid-Klemm-Kontaktelemente (102) des Verbinders (24) an getrennten elektrischen Kontakten (98,100) des Verbinders (24) ausgebildet sind, wobei an jedem der Kontakte (98,100) jeweils ein entsprechendes Kontaktteil (105) ausgebildet ist.

15. Anschlußeinheit nach Anspruch 14, wobei
das elektrische Bauteil (129) so an dem Montagerahmen (12) positionierbar ist, daß ein Flansch (18,20) von dem weiteren Kontaktelement (134) ergriffen wird und der Vorsprung (158) des elektrischen Bauteils zur Herstellung der elektrischen Verbindung zwischen dem seitlichen Kontaktelement (160) am Vorsprung des elektrischen Bauteils und dem Kontaktteil (105) des Kontaktes (98,100) in die Öffnung (124) des Verbinders (24) eingeführt wird.

16. Anschlußeinheit nach Anspruch 15, wobei
das seitliche Kontaktelement (160) in Form eines rippenförmigen, sich in Längsrichtung erstreckenden Elementes mit in der Erstreckungsrichtung des Vorsprunges (158) des elektrischen Bauteils im Abstand zu einander angeordneten Bereichen (160a,160c) ausgebildet ist, durch die je nach der Länge, um die der Vorsprung des elektrischen Bauteils in die Öffnung 124 des elektrischen Verbinders eingeführt wird, eine Vielzahl von innerhalb des Verbinders (24) im Abstand zu einander entlang der Öffnung (124) angeordneter Kontaktteile (105) selektiv durch die Bereiche (160a,160c) des seitlichen Kontaktelementes kontaktiert werden können.

17. Anschlußeinheit nach Anspruch 16, wobei
das elektrische Bauteil (131) aus einer Überspannungsschutzeinheit mit mindestens einem Überspannungsableiter (144,166) besteht, der von dem Kontaktelement (134) mit dem seitlichen Kontaktelement (160) verbunden ist.

## Claims

1. A connecting set for cable pairs of the telecommunication engineering, having electrical connectors each composed of two plastic bodies and cutting and clamping contact elements inserted thereinto, the contact slots of said electrical connectors projecting into clamping slots for said cable pairs, and having a mounting frame for receiving said electrical connectors,
wherein each partial body (24a, 24b) is formed in identical manner and receives a pair of cutting and clamping contact elements (102),
wherein each partial body (24a, 24b) has, on its base surface opposed to the clamping slots (94, 96), connecting elements (88, 91) for connecting two partial bodies (24a, 24b), thus forming a housing (75), and
wherein said housing (75) is provided with two opposed external surfaces with latch devices (81) and can loosenably latched in an opening (22) of the mounting frame (12), so that the two partial bodies project on both sides from the mounting frame (12).

2. A connecting set according to claim 1,
wherein said housing (75) is formed of housing portions (70) connected with each other of said partial bodies (24a, 24b),
wherein said partial bodies (24a, 24b) are held together by the cooperating openings (88) and latch tongues (91) forming said connecting elements, and
wherein each partial body (24a, 24b) is provided with one opening (88) and with one latch tongue (91).

3. A connecting set according to claim 1 or 2,
wherein said clamping slots (94, 96) for the cable pairs (42) are each formed between a pair of guide projections (72, 74; 76, 78) disposed at an angle of approximately 45° to a central plane ((14-14)/Fig. 12) extending in the longitudinal direction of the connector (24), so that the cutting and clamping contact elements (102) extend in parallel to the central plane of said connector (24).

4. A connecting set according to one of claims 1 to 3,
wherein said clamping slots (94, 96) each formed between one pair of guide projections (72, 74; 76, 78) extend at an angle of 90° to said clamping slots (96) each formed between the other pair of said guide projections.

5. A connecting set according to one of claims 1 to 4,
wherein in said housing (75) of the electrical connector (24) formed of said two partial bodies (24a, 24b), an opening (124) is provided, through which an electrical component with a projection (158) extending outwardly and carrying a lateral contact element (160) for establishing a connection with an internally provided contact portion (105) electrically coupled with at least one of said cutting and clamping contact elements (102) can be inserted.

6. A connecting set according to claim 5,
wherein said cutting and clamping contact elements (102) are disposed in the longitudinal direction of the electrical connector (24), and
wherein at said cutting and clamping contact elements (102) one internally provided contact portion (105) each is formed and positioned such that the lateral contact element (160) can optionally be contacted with one of said cutting and clamping contact elements (102) or with both cutting and clamping contact elements (102), depending on how far said projection (158) of the electrical component is inserted into the opening (124).

7. A connecting set according to one of claims 1 to 6,
wherein said mounting frame (12) is mounted in a vertically extending frame carrier (14) for receiving the cable pairs in turn being guided vertically to the electrical contacts (98, 100; 120) of the electrical connectors (24), and
wherein said mounting frame (12) can be pivoted, by bending the cable pairs (42) besides the frame carrier (14) and by loosening the connection between the mounting frame (12) and the frame carrier (14), whereby an electrical connection with the contact at the side opposed to said frame (12) is freely accessible from a point at one side of the connecting set (10).

8. A connecting set according to claim 7,
wherein at said frame carrier (14), laterally disposed holding elements (58, 60) for loosenably receiving said mounting frame (12) are supported, the mounting frame (12) including downwardly extending legs (46, 48) with openings (54, 56) provided therein, and said holding elements (58, 60) including resilient tongues (64), which can be inserted by moving the mounting frame (12) into said openings (54, 56), whereby said tongues (64) are resiliently deformed, until a latch condition is achieved, wherein stops (64b) at said resilient tongues (64) lock the mounting frame (12) at said frame carrier (14).

9. A connecting set according to claim 8,
wherein said holding elements (58, 60) comprise pockets (62) and said mounting frame (12) is provided with fingers (50) which can, during the movement of the mounting frame (12) for inserting the tongues (64) into the openings (54, 56), be introduced into said pockets (62) in the holding elements (58, 60), and thus fix the mounting frame (12) at said frame carrier (14).

10. A connecting set according to claim 9,
wherein said mounting frame (12) has a channel-type shape and includes a central web portion (16) as well as opposed flanges (18, 20), said legs (46, 48) being formed on either side of a cutout (44) at one end of the mounting frame (12) and enclose sections of the web portion (16) of the mounting frame (12) disposed on either side of said cutout (44), and said openings (54, 56) being provided in said sections.

11. A connecting set according to claim 10,
wherein said web portion (16) is bent off at opposed internal edges of the legs (46, 48) from the plane of the remaining sections of the web portion (16), in order to form fingers (50, 52) extending substantially parallely to the flanges (18, 20), however at the side of the web portion (16) opposed to said flanges (18, 20).

12. A connecting set according to one of claims 7 to 11,
wherein in said web portion (16) of said mounting frame (12), fastening openings (22) are provided in a line-type pattern in the longitudinal direction of the mounting frame (12), one line each being disposed besides the flanges (18, 20), and the electrical connectors (24) being loosenably mounted in said fastening openings (22).

13. A connecting set according to one of claims 1 to 12,
wherein an electrical component for establishing an electrical connection with the cutting and clamping contact elements (102) of the connector (24) can be connected at the flanges (18, 20) of said mounting frame (12),
wherein a projection (158) of said electrical component is inserted into the opening (124) and the connection is established by the contact of a lateral contact element (160) of said projection (158) of said electrical component with an internal contact portion (105) in the housing (75) of the connector (24), an adjacent flange (18, 20) of said mounting frame (12) being disposed, relative to the connector (24), such that during insertion, another electrical connection can be established by the respective flange (18, 20) coming into engagement with another contact element (134) provided at said electrical component.

14. A connecting set according to one of claims 1 to 13,
wherein said cutting and clamping contact elements (102) are formed at separated electrical contacts (98, 100) of the connector (24), at each of said contacts (98, 100) a corresponding contact portion (105) being formed.

15. A connecting set according to claim 14,
wherein the electrical component (129) can be positioned at said mounting frame (12) such that a flange (18, 20) is seized by the other contact element (134), and said projection (158) of said electrical component for establishing an electrical connection between the lateral contact element (160) at the projection of said electrical component and said contact portion (105) of the contact (98, 100) is introduced into the opening (124) of the connector (24).

16. A connecting set according to claim 15,
wherein said lateral contact element (160) is adapted in the form of a rib-type, longitudinally extending element with spaced sections (160a, 160c) in the extension direction of said projection (158) of said electrical component, by means of said sections (160a, 160c) of said lateral contact element, depending on the length by which the projection of said electrical component is introduced into the opening (124) of the electrical connector, a multitude of contact portions (105) disposed within the connector (24) and spaced to each other along the opening (124) being selectively contacted.

17. A connecting set according to claim 16,
wherein the electrical component (131) is composed of a voltage surge protection unit with at least one surge arrester (144, 166) being connected from said contact element (134) with said lateral contact element (160).

## Revendications

1. Dispositif de raccordement pour paires de câbles de télécommunication avec des connecteurs électriques consistant en deux corps en matière synthétique et d'éléments de contact par déplacement d'isolation y intégrés, dont les fentes de contact font saillie dans des rainures de serrage pour les paires de câbles et un cadre de montage pour recueillir les connecteurs électriques,
chaque corps partiel (24a, 24b) étant configuré de façon identique et recevant une paire d'éléments de contact par déplacement d'isolation (102)
chaque corps partiel (24a, 24b) présentant sur sa face de base opposée aux rainures de contact (94, 96) des éléments de liaison (88, 91) pour la liaison des deux corps partiels (24a, 24b) pour former un boîtier (75) et
le boîtier (75) étant muni de dispositifs d'arrêt (81) sur deux faces extérieures opposées pouvant être enclenchés de façon amovible dans une ouverture (22) du cadre de montage (12), les deux corps partiels (24a, 24b) faisant saillie des deux côtés du cadre de montage (12).

2. Dispositif de raccordement selon la revendication 1,
le boîtier (75) étant formé par des parties de boîtiers (70), des corps partiels (24a, 14b) reliés ensemble,
les corps partiels (24a, 24b) étant assemblés par des ouvertures (88) concourantes formées par les moyens de liaison et des languettes d'arrêt (91) et
chaque corps partiel (24a, 24b) pouvant être muni d'une ouverture (88) et d'une languette d'arrêt (91).

3. Dispositif de raccordement selon la revendication 1 ou 2,
les rainures de serrage (94, 96) étant dimensionnées pour les paires de câbles (42) entre une paire d'épaulements de guidage (72, 74 ; 76, 78) qui sont disposés dans un angle d'environ 45° par rapport à une surface médiane ((14-14)/fig. 12) s'étendant en direction longitudinale du connecteur (24), de sorte que les élément de contact par séparation d'isolation (102) sont parallèles à la surface médiane du connecteur (24).

4. Dispositif de raccordement selon l'une des revendications 1 à 3,
les rainures de serrage (94, 96) situées chacune entre une paire d'épaulements de guidage (72, 74 ; 76, 78) étant placées dans un angle d'environ 90° par rapport aux rainures de guidage (96) situées entre l'autre paire d'épaulement de guidage.

5. Dispositif de raccordement selon l'une des revendications 1 à 5,
une ouverture (124) étant prévue dans le boîtier (75) du connecteur électrique (24), formée de deux corps partiels (24a, 24b), à travers laquelle un composant électrique avec un épaulement (158) portant un élément de contact (160) latéral, s'étendant vers l'extérieur, pour la réalisation d'une liaison avec un élément de contact (105) disposé à l'intérieur et accouplé électriquement à au moins un des éléments de contact par séparation d'isolation (102), peut être introduit.

6. Dispositif de raccordement selon la revendication 1,
les éléments de contact par séparation d'isolation (102) étant orientés longitudinalement au connecteur électrique (24) et un élément de contact électrique (105) étant situé à l'intérieur des éléments de contact par déplacement d'isolation (102) est positionné de telle sorte que l'élément de contact latéral (160) peut être contacté au choix avec un des éléments de contact par séparation d'isolation (102) ou avec les deux éléments de contact par séparation d'isolation (102), selon la longueur d'introduction de l'épaulement (158) du composant électrique dans l'ouverture (124).

7. Dispositif de raccordement selon l'une des revendications 1 à 6,
le cadre de montage (12) étant monté dans un porte-cadre (14) s'étendant verticalement pour la réception des paires de câbles étant également à la verticale par rapport aux contacts électriques (98, 100 ; 120) et connecteurs électriques (24) et le cadre de montage (12) étant pivotable par pliage des paires de câbles (42) à côté du porte-câble (14) par déconnexion de la liaison entre le cadre de montage (12) et le porte-cadre (14), rendant accessible une liaison électrique avec le contact sur la face opposée au cadre (12) à partir d'un point sur un côté du dispositif de raccordement (10).

8. Dispositif de raccordement selon la revendication 7,
des éléments de soutien (58, 60) étant disposés latéralement sur le porte-cadre (14) pour la réception amovible du cadre de montage (12), le cadre de montage (12) comprenant des branches (46, 48) dirigées vers le bas et des ouvertures (54, 56) et les éléments de soutien (58, 60) présentant des languettes souples (64) pouvant être introduites dans ces ouvertures (54, 56) par un déplacement du cadre de montage (12), et que de ce fait les languettes (64) peuvent être souplement déformées jusqu'à ce qu'un état de crantage est atteint, dans lequel des butées (64b) sur les languettes souples (64) bloquent le cadre de montage (12) sur des porte-cadres (14).

9. Dispositif de raccordement selon la revendication 8,
sur lequel les éléments de soutien (58, 60) contiennent des poches (62) et le cadre de montage (12) est équipé de doigts (50) qui peuvent être introduits, pendant le déplacement du cadre de montage (12) pour l'introduction des languettes (64), dans les ouvertures (54, 56) dans les poches (62) dans les éléments de soutien (58, 60) et bloquant ainsi le cadre de montage (12) sur le porte-cadre (14).

10. Dispositif de raccordement selon la revendication 9,
sur lequel le cadre de montage (12) est en forme de goulotte présentant une partie barrettes médiane (16) et des brides opposées (18, 20), les branches (46, 48) étant formées des deux côtés d'un creux (44) sur une extrémité du cadre de montage (12) et renfermant les éléments de la partie barrettes (16) du cadre de montage se trouvant des deux côtés du creux (44), dans lesquels sont prévues des ouvertures (54, 56).

11. Dispositif de raccordement selon la revendication 10,
sur lequel les parties barrettes (16) sont recourbées sur des bords intérieurs opposés des branches (46, 48), à partir de la surface du secteur restant de la partie barrettes (16) pour la formation de doigts (50, 52), les doigts (50, 52) s'étendant essentiellement en parallèle aux brides (18, 20), mais des brides (18, 20) du côté opposé à la partie barrette (16).

12. Dispositif de raccordement selon l'une des revendications 7 à 11,
dans la partie barrettes (16) du cadre de montage (12) duquel sont prévues des ouvertures de fixation (22) disposées en rangées longitudinalement au cadre de montage (12), une rangée étant disposée à côté des brides (18, 20) et les connecteurs électriques (24) pouvant être montés de façon amovible dans ces ouvertures de fixation (22).

13. Dispositif de raccordement selon l'une des revendications 1 à 12,
sur lequel un composant électrique pour la réalisation d'une liaison électrique avec les éléments de contact par déplacement d'isolation (102) du connecteur (24) peut être branché sur les brides (18, 20) du cadre de montage (12),
un épaulement (158) du composant électrique peut être intégré dans l'ouverture (124), et la liaison est réalisée par l'appui d'un élément de contact latéral (160) de l'épaulement (158) du composant électrique à une partie de contact intérieure (105) dans le boîtier (75) du connecteur (24), une bride limitrophe (18, 20) du cadre de montage (12) étant disposée par rapport au connecteur (24) de telle sorte que pendant l'introduction une autre liaison électrique peut être réalisée par la mise en contact de la bride correspondante (18, 20) avec un autre élément de contact (134) prévu sur le composant électrique.

14. Dispositif de raccordement selon l'une des revendications 1 à 13,
sur lequel les éléments de contact par déplacement d'isolation (102) du connecteur (24) sont formés sur des contacts électriques séparés (90, 100) du connecteur (24) une partie de contact adéquate (105) étant montée sur chaque élément de contact (105).

15. Dispositif de raccordement selon la revendication 14,
sur lequel le composant électrique (129) peut être positionné sur le cadre de montage (12), de sorte qu'une bride (18, 20) est saisie par un autre élément de contact (134) et l'épaulement (158) du composant électrique introduit dans l'ouverture (124) du connecteur (24) entre l'élément de contact latéral (160) sur l'épaulement du composant électrique et l'élément de contact (105) du contact (98, 100) pour la réalisation d'une liaison électrique.

16. Dispositif de raccordement selon la revendication 15,
sur lequel l'élément de contact latéral (160) est conçu sous forme d'un élément nervuré, s'étendant en direction longitudinale avec des secteurs (160a, 160c) s'étendant le long de l'épaulement (158) du composant électrique avec un certain écart entre eux, à travers lesquels, en fonction de la longueur d'introduction de l'épaulement du composant électrique dans l'ouverture 124 du connecteur électrique, une multiplicité d'éléments de contact (105) à l'intérieur du connecteur (24) disposés avec un certain écart entre eux le long de l'ouverture (124) peuvent être contactés sélectivement par les secteurs (160a, 160c) de l'élément de contact latéral.

17. Dispositif de raccordement selon la revendication 16,
sur lequel le composant électrique (131) consiste en une unité coupe-circuit de surtension avec au moins un éclateur-déchargeur (144, 166) relié à partir de l'élément de contact (134) avec l'élément de contact latéral (160).
